(19) Europäisches Patentamt
European Patent Office
Office européen des brevets

(11) Publication number: **0 686 471 A2**

# (12) EUROPEAN PATENT APPLICATION

(21) Application number: **95108365.8**

(22) Date of filing: **01.06.95**

(51) Int. Cl.[6]: **B29C 43/22**, B29C 67/24, G03G 21/00, //B29K75:00

(30) Priority: **07.06.94 JP 150451/94**

(43) Date of publication of application:
**13.12.95 Bulletin 95/50**

(84) Designated Contracting States:
**BE DE ES FR GB IT**

(71) Applicant: **BANDO KAGAKU KABUSHIKI KAISHA**
**2-15 Meiwa-dori 3-chome**
**Hyogo-ku**
**Kobe (JP)**

(72) Inventor: **Fujiwara, Yoshinori**
**2-15 Meiwa-dori 3-chome,**
**Hyogo-ku**
**Kobe (JP)**
Inventor: **Shigechika, Yuichi**
**2-15 Meiwa-dori 3-chome,**
**Hyogo-ku**
**Kobe (JP)**
Inventor: **Taniguchi, Toshiharu**
**2-15 Meiwa-dori 3-chome,**
**Hyogo-ku**
**Kobe (JP)**
Inventor: **Tani, Arata**
**2-15 Meiwa-dori 3-chome,**
**Hyogo-ku**
**Kobe (JP)**

(74) Representative: **Knoblauch, Andreas, Dr.-Ing. et al**
**Kühhornshofweg 10**
**D-60320 Frankfurt (DE)**

## (54) Method and apparatus for producing cleaning blades

(57) This disclosure relates to a production method for a cleaning blade made of thermosetting type polyurethane comprising mixing and stirring the liquid of a polyurethane prepolymer which is a raw material component for a thermosetting type polyurethane polymer and the liquid of a crosslinking agent, discharging the mixture (U) thereof into a die having a concave cross section in a molding drum (20), pressing it to the outer peripheral face of the molding drum (20), heating and pressurizing it via an endless belt (24) synchronized with the rotation of the drum (20) to continuously mold a banded blade molding (S) having a fixed width, and cutting the blade molding (S) by a fixed length after cooling it down.

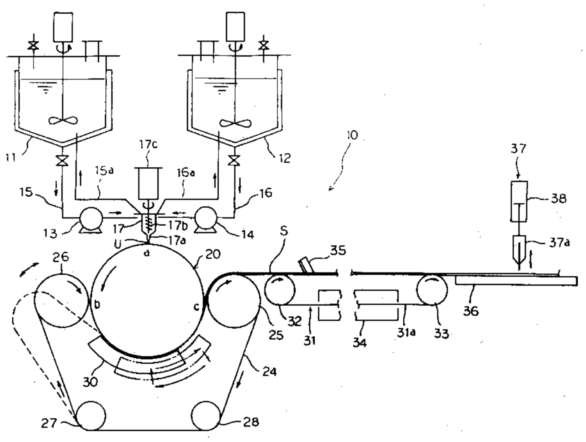


EP 0 686 471 A2

FIELD OF THE INVENTION

The present invention relates to a cleaning blade used for removing residual toners on a sensitizer drum in electrophotographic system copying machines for printers and facsimile machines, and a production method and production apparatus for the same.

BACKGROUND OF THE INVENTION

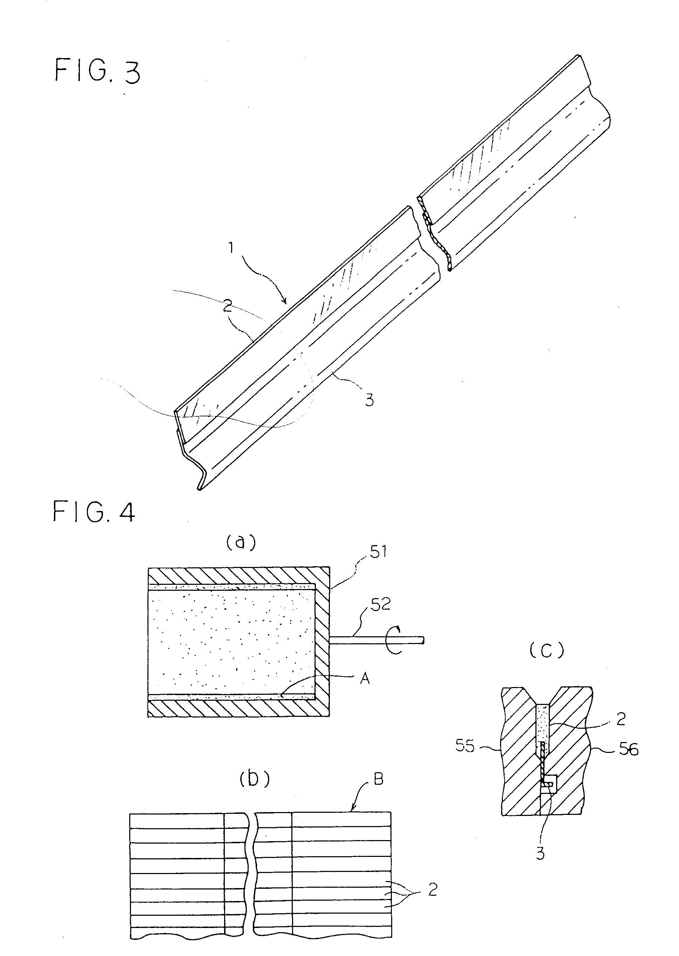

A cleaning blade 2 of this kind is usually used in a state where it is mounted on a metallic holder 3 as shown in Fig. 3. Such a blade has, up to the present, been produced by either of the following two methods.

One production method is called a centrifugal molding method. As shown in Fig. 4(a), a liquid A prepared by mixing and stirring a urethane prepolymer having a terminal isocyanate group and a crosslinking agent (called a chain extending agent or a curing agent in some cases) is injected into a cylindrical hollow drum 51, and the drum 51 is rotated on an axis 52 at high speed to form, by centrifugal force, a liquid tubular layer A having a fixed wall thickness on the inner peripheral face of the drum 52. At the same time, the liquid layer is reacted while heating to form a cylindrical polyurethane sheet mold, which is carefully removed from the drum by hand. After cutting lengthwise and opening the cylindrical mold to form a flat polyurethane sheet B, the polyurethane sheet B is maintained at a prescribed temperature for a prescribed time to subject it to secondary crosslinking. Then, it is further cured at normal temperatures. Next, it is cut to prescribed dimensions as shown in Fig. 4(b) to produce a number of rectangular and tabular cleaning blades 2, after which one side edge part of each cleaning blade 2 is adhered to an end edge of the metallic holder 3 as shown in Fig. 3 with an adhesive, whereby a cleaning blade tool 1 is completed as a finished product.

Another method is a production method called a die molding method. As shown in Fig. 4(c), a metallic holder 3 on which an adhesive is coated beforehand is mounted in split dies 55, 56 and a liquid A, prepared by mixing and stirring a urethane prepolymer of a terminal isocyanate group and a crosslinking agent, is injected into a mold cavity of the split dies 55, 56. The liquid is heated for a prescribed time to cure the cleaning blade 2, whereby the blade is molded integrally with the holder 3. Next, the split dies 55, 56 are opened to remove the blade 1, and after subjecting it to secondary crosslinking and a curing process, the end part of each cleaning blade is cut with a cutter in order to shape an edge (ridgeline), whereby a cleaning blade tool as a product is completed.

Other prior art includes a production method of a polyurethane film described in JP-B-5-7O57O (the term "JP-B" as used herein means an examined Japanese patent publication). In this production method, thermoplastic polyurethane resin pellets are made and placed in an extruder to be melted, whereby the time for extruding and molding to a prescribed shape is reduced. After mixing fixed amounts of a polyol component and a polyisocyanate compound, which are the raw material components for polyurethane, together with a chain extending agent, the mixture is injected into a biaxial extruder to polymerize it and is passed through a die via a measuring pump to biaxially stretch it to a film of about 50 $\mu$m, after which it is rolled through a rolling mill after passing through plural cooling rolls.

However, the prior production methods described above leave room for improvement in terms of the following points:

(1) Centrifugal molding method: While it has the advantage that a single molding provides a large number of blades, it takes a long time from injection to extraction since it utilizes a batch system. While a large number of blades are molded at one time at the cleaning blade molding step, the blades must be adhered to holders one by one after the molding step. Accordingly, it is difficult to automate the production steps thereof because of the lack of continuity between main steps.

(2) Die molding method: Dies have to be changed for each kind of product because of the difference in dimensions of cleaning blades and form of holders, and in order to mass-produce this system, respective kinds of dies have to be prepared in fair quantities. In addition, the heating furnace receiving these dies must be large as well, and installation for all of the equipment requires a large space, which increases installation costs. Further, productive efficiency is low since installation takes time.

(3) JP-B-5-7O57O: It is believed that sheets which are thick to some extent can be produced by employing this production method, in which filming is carried out using a die having a large opening. In the case of cleaning blades, the quality thereof depends on the quality of the ridgelines and uniformity in the thickness of the molded product. That is, in order to obtain a constant thickness and high quality ridgeline it is necessary to mold one face (the face in which the ridgeline is formed) of the blade to a mirror face and cut it perpendicularly to the blade face. However, this entails much difficulty in order to

obtain a uniform thickness and finish, on at least one face, to a mirror face by extruding moldings from the die. Also, a biaxial extruder is expensive, and therefore increases installation costs, which brings about an increase in production costs. Further, a residue in the biaxial extruder causes heat decomposition and produces foreign matter, which cause quality reduction. Accordingly, it is not practically possible to apply the production method described in the above publication to the production of a cleaning blade.

## SUMMARY OF THE INVENTION

This invention has been arrived at in view of the points described above. The object is to provide a cleaning blade of a thermosetting type polyurethane which can be produced continuously at high production efficiency, the production processes of which can be readily automated and simplified and the installation cost of which can be reduced, and a production method and production apparatus for the same.

In order to achieve the object described above, the production method for a cleaning blade according to the present invention comprises the steps of:

mixing and stirring a liquid polyurethane prepolymer, which is a raw material component for a thermosetting type polyurethane polymer, and a liquid crosslinking agent;

injecting the mixture thereof into a continuous die having a concave cross section and which is heated at a prescribed temperature;

heating and pressurizing the mixture to continuously mold a banded blade molding having a fixed width, and cutting the above blade molding by a fixed length after cooling. Here, the liquid polyurethane prepolymer is the reaction product of high molecular weight polyol and polyisocyanate and includes a polyurethane pseudoprepolymer having low blending ratio of the high molecular weight polyol. Also, the crosslinking agent contains only a crosslinking agent (chain extending agent) in some cases and a high molecular weight polyol in other cases.

Further, a cutting margin provided at one side edge of the banded blade molding described above is preferably cut continuously with a fixed-edged tool disposed perpendicularly to one face thereof at an initial stage in the cooling described above, while transporting the above blade molding.

The component of the high molecular weight polyol mixed into at least one of the liquids selected from (a) the liquid polyurethane prepolymer and (b) the liquid crosslinking agent, preferably has an average molecular weight of about 500 to about 5,000 and a number average functional group number (f) of $2 \leq f \leq 4$. The number average molecular weight of the high molecular weight polyol component described above resides more preferably in the range of about 1,000 to about 3,000.

The apparatus for producing the cleaning blade of the present invention comprises a molding drum which includes molding grooves having a concave cross section formed over the entire surface of a peripheral face and which is supported horizontally and rotated around a horizontal central axis; a measuring mix-casting machine, disposed over the above molding drum with a lower discharge port for a mixed solution turned toward the molding grooves described above, for mixing and stirring the liquid of a polyurethane prepolymer which is a raw material component for a thermosetting type polyurethane polymer and the liquid of a crosslinking agent; a metallic endless belt which is pressed onto a part of the outer peripheral face of the above molding drum and runs in synchronization with the peripheral speed of the above molding drum; a cooling belt conveyer in which a transporting part for the above blade molding is horizontally disposed with one end part thereof close to an output part for the banded blade molding in the molding grooves of the molding drum; a cooling device for cooling the non-transporting part of an endless belt in this belt conveyor; and a cutter for cutting the above blade molding into fixed lengths.

In the production apparatus of the present invention, a conveyor belt in the belt conveyor described above is an endless conveyor belt, and a ceramic edged tool can be disposed over the horizontally running part of this endless conveyor belt so that one side edge part of the banded blade molding described above can be cut in a longitudinal direction.

A pressure device for supplementing the pressure force of the endless belt described above can be provided at the back face of the above endless belt, pressed toward the outer peripheral face of the above molding drum.

Publicly known components can be used as the components for producing the polyurethane elastomer according to the present invention. The high molecular weight polyol can include polyoxyalkylene glycols such as polyethylene glycol, polypropylene glycol and polyoxytetramethylene glycol; or polyether type polyols such as alkylene oxide adducts of bisphenol A, glycerine and propylene oxide; or polyester type polyols obtained by the polymerization reaction of dibasic acids such as adipic acid, phthalic anhydride, isophthalic acid, maleic acid, and fumaric acid with glycols such as ethylene glycol, propylene glycol, 1,4-butanediol, 1,6-hexanediol, and trimethylolpropane; or polycaprolactonediol or polycarbonatediol.

The number average molecular weight of these high molecular weight polyols is preferably in the range of about 500 to about 5,000, preferably about 1,000 to about 3,000.

The diisocyanate compound can include tolylenediisocyanate, 4,4-diphenylmethanediisocyanate, hexamethylenediisocyanate, isophronediisocyante, and 1,4-cyclohexanediisocyanate.

The chain extending agent can include low molecular weight diols such as ethylene glycol, 1,4-butanediol, diethylene glycol, 1,6-hexanediol, and neopentyl glycol, and diamine such as ethylenediamine, hexamethylenediamine, and isophoronediamine. Low molecular weight diols are preferably used.

Further, trimethylolpropane, triethanolamine, glycerine, and ethylene oxide and propylene oxide adducts thereof may be added as a polyfunctional component where necessary.

These polyols and the diisocyanate compounds may be reacted by any of a one shot method, a pseudoprepolymer method and a prepolymer method which are employed in existing polyurethane production methods. The pseudoprepolymer method or the prepolymer method is preferably used since products obtained thereby have stable physical properties and excellent qualities.

In the production of the polyurethane described above, the equivalent ratio of 0H/NCO groups is preferably in the range of about 0.8 to about 1.05, more preferably about 0.85 to about 0.95 in terms of the physical properties of the polyurethane formed. Further, a reaction accelerator is used where necessary. This reaction accelerator is an imidazole derivative represented by the following formula [CF 1], concrete examples thereof including 2-methylimidazole and 1,2-dimethylimidazole.

[CF 1]

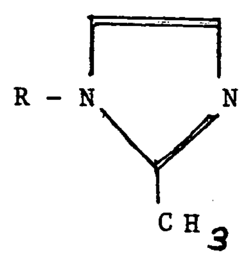

wherein R represents hydrogen, methyl or ethyl.

The reaction accelerator is used in the range of about 0.01 to about 0.5 parts by weight, preferably about 0.05 to about 0.3 part by weight, per 100 weight parts of the prepolymer as an effective amount. Agents having temperature sensitivity or a delayed effect property are preferably used since pot life can be extended and mold-releasing time can be shortened.

In the present invention, a commercially available machine can be used as a two-liquid mix-casting machine used for mixing and stirring the liquid polyurethane prepolymer, which is a raw material component for a thermosetting type polyurethane, and the liquid crosslinking agent. A three-throw or more plunger type pump is preferably used for a measuring pump in view of measuring accuracy. In particular, because the production apparatus of the present invention is required to employ a rapid curing procedure using a reaction accelerator, a small volume type pump disclosed in JP-B-6-11389 in which residue in the mixing chamber is prevented and heat generation caused by reaction heat is suppressed, is preferred as a stirring mixing chamber.

According to the production method for the cleaning blade of the present invention having the constitution described above, the mixture of the liquid polyurethane prepolymer which is a raw material component for a thermosetting type polyurethane and the liquid crosslinking agent are continuously cured in a die having a concave cross section and molded to a banded blade molding having a fixed width. Because this molding can be taken out continuously as a series, the blade molding can be molded by the required length according to the number of end products and cut by a fixed length. Adhering the blade molding to a holder with an adhesive then completes the end product. Thus, according to the production method of the present invention, the required number of blade moldings of a fixed length can be continuously produced, thereby eliminating waste, and because the blade moldings can be delivered one by one in order, automation, including adhering of the blade molding to the holder, can easily be achieved.

According to the production method, because a blade molding is not cured at an initial stage of cooling, cutting resistance to an edged tool is low, and accordingly a narrow cutting margin can be smoothly cut. In addition, linearity is good and a sharp ridgeline can be formed. Thus, a high quality cleaning blade is obtained.

According to a further production method, reaction proceeds smoothly for the following reasons. That is, a high molecular weight polyol component having an average molecular weight less than about 500 lowers viscosity too much and reduces operability. Accordingly, the physical properties of the finished polyurethane obtained are not good. Meanwhile, an average molecular weight exceeding about 5,000 increases viscosity too much and makes mixing difficult. The average functional group number (f) of $f = 1$ prevents polymerization. The number of $f \geqq 5$, which creates too much functionality, increases the viscosity of the polymer and reduces physical properties as well.

Since the cleaning blade is produced by the production method described above, one face (the face where a sweeping ridgeline is formed at one side edge) of the blade is finished to a mirror face, and because a sweeping ridgeline can be sharply formed, quality is high, and automation of all the production processes can reduce the production cost.

In use of the production apparatus of this invention, the mixed solution of the liquid of a polyurethane prepolymer and the liquid of a crosslinking agent is discharged from the discharge port of the measuring mix-casting machine into molding grooves in a molding drum and is pressurized with a metallic endless belt while heating in the grooves to promote a polymerization reaction, whereby a polyurethane elastomer (blade molding) which has a fixed width and a continuous band shape is continuously formed. In addition, the bottom faces of the molding grooves in the molding drum can be finished to high precision to form one face of the blade molding to a mirror face. The shapes of the blade moldings which are continuously taken out of the molding grooves are put in order while being cooled on the flat belt of a cooling belt conveyor. On the other hand, the temperature of the cooling conveyor belt is increased by absorbing the heat of the blade moldings and therefore cooled by a cooling device. Thus, the molding, which is cooled to close to room temperature, is cured and stabilized. In this state, the molding is cut with a cutter to the length of the end product blade, whereby a polyurethane-made cleaning blade having the prescribed width and thickness is completed.

The production apparatus of this invention cuts a banded blade molding to a prescribed width using a ceramic edged tool before being cooled and cured and it is simultaneously transported. Thus, a sharp ridgeline which is required for the cleaning blade is formed.

When using the production apparatus of this invention, in the case where pressure exerted on the liquid discharged into the grooves in the molding drum described above is insufficient with only the pressure exerted by the endless belt described above, pressure can be applied to the peripheral face of a molding drum from the back of the endless belt with a pressure device.

## BRIEF DESCRIPTION OF THE DRAWINGS

This invention will be better understood from the following detailed description taken in conjunction with the accompanying drawings, wherein:

Fig. 1 is a diagrammatic front view showing a preferred embodiment of apparatus for producing a cleaning blade according to the present invention;

Fig. 2(a) is a perspective view showing another preferred embodiment of the production apparatus for the cleaning blade; and Fig. 2(b) is a cross-sectional view showing a part of a molding drum of the apparatus shown in Fig. 2(a).

Fig. 3(a) perspective view of a blade tool including a cleaning blade of the present invention.

Fig. 4(a), Fig. 4(b) and Fig. 4(c) illustrate conventional production methods.

## DETAILED DESCRIPTION OF THE INVENTION

The preferred embodiments of the cleaning blade of the present invention, and a production apparatus and production method for the same will be explained below based on the above described drawings.

As shown in Fig. 1, a production apparatus 10 for a cleaning blade includes two tanks or hoppers 11, 12, and pipe arrangements 15, 16 from the outlets at the bottoms of the respective tanks 11, 12 are connected to a mixing head 17 (two-liquid measuring mix-casting machine) via measuring pumps 13, 14 and valves 13A. The mixing head 17 and the tanks 11, 12 are each connected through return pipe arrangements 15a, 16a. The mixing head 17 may be a prior art structure in which a rotatable stirrer 17b is supported at its upper end portion so that it can be rotated in a chamber equipped with two liquid introduction ports at its upper end, and a discharge port 17a for the mixed liquid at the lower center end. The stirrer is rotated by a motor 17c disposed above the mixing head 17.

As shown in Fig. 2(a), a molding drum 20 includes a molding groove 21 [Fig. 2(b)] having concave cross sections formed around the entire peripheral face of the cylindrical metallic drum, and semicircular

overflow auxiliary grooves 22, are formed at both sides of the groove 21 as shown in Fig. 2(b). The grooves 21 and 22 extend circumferentially around the drum and are parallel. The molding drum 20 is made of, for example, hard aluminum, stainless steel or the like. In the present preferred embodiment, a jacket (not illustrated) for circulating heated steam or oil is provided in the inside of the drum 20 for heating the peripheral face of the drum 20 to a prescribed temperature (about 145°C) for curing the mixture in the groove 21. As shown in Fig. 2(a), the central part of the drum 20 is rotatably supported by a horizontal rotation axle 23 and it is rotated counter-clockwise [as seen in Fig. 2(a)] at prescribed speeds (for example, one revolution per about 80 seconds) by a drive mechanism (not illustrated) coupled to the axle 23.

An endless belt 24, made of a metallic belt plate such as stainless steel, for pressurizing and heating, is pressed to an outer peripheral face in substantially the lower half of the molding drum 20. This endless belt 24 is hung over a driving roll 25 and three coupled driving rolls 26, 27, 28 (Fig. 1) and rotated in the same direction as that of the molding drum 20 and at the same speed as the peripheral speed of the molding drum 20. The endless belt 24, for example as shown in Fig. 2(a), is equipped with a plurality of inscribed heaters 41 and heated to a prescribed temperature (about 145°C). Further, the coupled driving roll 26 present at the left side of Fig. 1 is composed so as to approach or separate the belt 24 from the molding drum 20 and is set so that the contact-starting point of the peripheral face of the drum 20 with the endless belt 24, that is, a heating and pressuring-starting position of the injected liquid U, can be adjusted. This constitution makes it possible to finely adjust the rotation time between a point a and a point b without changing the peripheral speed of the drum 20 to meet variations in the reactivity of the injecting liquid U which is a polyurethane raw material.

A circular-arc back pressure device 30 (Fig. 1) is installed at the lower part of the drum 20 in contact with the endless belt 24 to press the endless belt 24 against the outer peripheral face of the drum 20. This back pressure device 30 moves counter-clockwise at prescribed angles (see the arrows 30A in Fig. 1) in synchronization with the rotation of the endless belt 24 and quickly returns clockwise after separating from the endless belt 24. The device 30 then moves counterclockwise again while in contact with the endless belt 24. The back pressure device 30 is used when pressure force is insufficient, with only the endless belt 24.

Further, a cleaning-releasing agent device 29 [Fig. 2(a)] for cleaning the inside of the molding grooves 21 and spraying a releasing agent, which is not illustrated in Fig. 1, is attached between a point c and the point a of the drum 20. A similar device (not illustrated) is attached at the return side (for example, between the coupled driving roll 27 and the coupled driving roll 28) of the endless belt 24. A device in which, for example, a cleaning cloth rolled in a roll form is urged against the drum 20 to wipe the grooves 21 is also provided but not illustrated.

A cooling belt conveyor 31 is provided in the immediate vicinity of the upper-right driving roll 25. The belt of this conveyor 31 comprises a metallic endless belt 31a such as a stainless steel belt and it is hung between two upper rolls 32, 33. A cooling device 34 (Fig. 1) is provided under the conveyor 31, and the lower running part of the endless belt 31a is surrounded by the cooling device 34 to cool the belt 31a by means of spraying cooling water on the belt 31a.

A ceramic straight edged tool 35 having a low friction coefficient is obliquely fixed close to a transport-starting position at the horizontal transporting part of the belt conveyor 31. A supplying device (not illustrated) for a cutting fluid for the edged tool 35, which is omitted from the drawing, is also included.

A supporting plate 36 having a horizontal and flat upper face is provided in the immediate vicinity of the roll 33 of the belt conveyor 31. A cutting device in which a cutter 37a is moved up and down (by, for example, an air cylinder 38) is provided over this supporting plate 36.

The production apparatus 10 of the present preferred embodiment is constituted in the way described above, and the production method of a cleaning blade with this production apparatus 10 will now be explained based on Fig. 1.

A prepolymer and a crosslinking agent are respectively placed in the tanks 11 and 12 of the two-liquid measuring mix-casting machine 17 and heated and stirred. The prepolymer and the crosslinking agent thus obtained are supplied to the mixing head 17 by the measuring pumps 13 and 14 and discharged from the discharge port 17a into the molding groove 21 [Fig. 2(a)] of the molding drum 20 which is adjusted to a temperature of 145°C, while evenly stirring and mixing. On this occasion, the molding drum 20 is rotated counter-clockwise at a prescribed speed (one revolution/8O seconds), and the needed amount, depending on the peripheral speed of the drum 20 and the grooved depth and width of the groove 21, is continuously injected.

The reaction of the injecting liquid U is promoted at intervals from the point a just under the discharge port 17a to the point b (a position immediately before the starting of pressing by the endless belt 24) of the molding drum 20 and then heated and pressed with the press-molding endless belt 24 heated to 145°C at

intervals from the point b to the point c of the molding drum 20 under a surface pressure of 1960 KPa. This almost completes the urethane polymerization reaction of the injecting liquid U, and a blade molding S having the required thickness and a flat mirror face is continuously molded. When pressure force is insufficient only with the endless belt 24, surface pressure is applied as well with the back pressure device 30. In the present preferred embodiment, the time when the injecting liquid U is moved from the point a to the point b while rotating is set to 20 seconds, and the moving time from the point b to the point c is set to 40 seconds. As described above, the reaction of the injecting liquid U and the molding time can be finely controlled by changing the position of the point b with an approaching/separating operation of the coupled driving roll 26 to the drum 20 and varying the angle of rotation between the point a and the point b and the angle of rotation between the point b and the point c.

The banded blade molding S thus continuously formed is released from the groove 21 of the molding drum 20 at the point c and guided onto the endless belt 31a of the cooling conveyor 31. Because the endless belt 31a is cooled down to ambient temperatures (about 2O°C) by the cooling device 34, the blade molding S is transported while cooling on the endless belt 31a. Since at the stage that the blade molding S is transferred on the endless belt 31a, the blade molding S is in a state of relatively high temperature (close to 145°C) and is not sufficiently cooled down, cutting resistance is low. Accordingly, in the present preferred embodiment, the cutting margin (or trim edge) S' of one side edge part in the blade molding S is set to continuously be cut with a ceramic edged tool 35 having a low friction coefficient by utilizing the moving force of the endless belt 31a. This allows a sharp ridgeline having width and straightness which are necessary for a cleaning blade to be formed. The blade molding S is cured by maintaining and cooling it on the horizontal and flat endless belt 31a until it is transferred on the supporting plate 36 and at the same time, it is formed into a blade as an end product.

After the blade molding S is transferred onto the supporting plate 36 from the belt conveyor 31, the cutter 37a comes down to cut the blade molding S to a prescribed length. Thus, the production process of the tabular cleaning blade 2 (Fig. 3) is finished. The cleaning blade 2 thus produced has one side edge thereof (the side edge opposite from the edge cut by the blade 35) adhered to the end edge part of the metallic holder 3 with an adhesive as shown in Fig. 3, whereby the cleaning blade tool 1 as a finished product is completed. In the case of the present invention, since needed pieces of the cleaning blade 2 are produced one by one, unlike a conventional centrifugal molding method, adhering work can be easily automated by adhering the cleaning blade produced to the holder 3.

Next, another preferred embodiment of the production apparatus 10' of the present invention will be explained with reference to Fig. 2. The production apparatus 10' of the present preferred embodiment is different in the following points from the preferred embodiment described above. That is, as shown in Fig. 2(a), a large number of semicylindrical heaters 41 are provided between the point a and the point b in the outer peripheral face of the molding drum 20, and the heaters 41 are provided on the inner peripheral face side of the endless belt 24 between the point b and the point c of the molding drum 20 and on an inner peripheral face at another part for heating the endless belt 24. The rollers 25 to 27 over which the endless belt 24 is hung are reduced in number from 4 to 3. The cleaning-releasing agent treatment device 29 is provided between the point c and the point a of the molding drum 20. Further, a part of the lower running part of the cooling endless belt 31a is set to be inserted into a cooling device (not illustrated) by extending it concavely downward via rollers 44 to 47. In addition, as shown in Fig. 2(a), a thick roll paper or a soft synthetic resin tape 42 is set to be sent out of one roll and rolled up on the other roll by the width of the cutter 37a, every time the cutter 37a moves up and down. A reciprocating-movable table 43 is vertically connected to the supporting plate 36 to arrange the cleaning blades 2 cut with the cutter 37a in order on the table 43. Because the rest of this structure is common to the preferred embodiment described above, the same reference numbers as those in Fig. 1 are assigned to common constitutional members and explanations will be omitted.

Cutting work for forming the ridgeline of the cleaning blade 2 may be carried out in the state where the cleaning blade 2 is adhered to the holder 3. Accordingly, in this case, the edged tool 35 in the preferred embodiment described above may be omitted, and the cutting margin S' will be cut with another cutting device (not illustrated).

The blending composition of thermosetting type polyurethane used in the present invention and the molding conditions will be shown in the following Table-1 and the physical properties and the dimensions of the molding blade obtained in Table-2.

Preferred Embodiment 1

As shown in Table-1, after heating and stirring a prescribed amount of polycaprolactone ester diol (average molecular weight: 2,000) at 70 °C for 3 hours under reduced pressure (5 mm Hg) to dehydrate it, this was put into a reactor, then 4,4-diphenylmethanediisocyanate was added to the reactor and stirred at 70 °C for 1 to 4 hours under a nitrogen atmosphere, whereby a liquid urethane polymer having a residual isocyanate group content of 7.0% was obtained. On the other hand, with respect to a crosslinking agent component as shown in Table-1, prescribed amounts of 1,4-butanediol, trimethylolpropane and 1,2-dimethylimidazole were heated and stirred at 70 °C for 3 hours under reduced pressure (5 mm Hg) to carry out dehydration, whereby a crosslinking agent having a hydroxyl group equivalent of 45 was obtained.

The prepolymer and crosslinking agent thus obtained were respectively put in the tanks 11 and 12 of a two-liquid measuring mix-casting machine and heated and stirred so that liquid temperatures became as shown in Table-1. This was supplied to the mixing head 17 with the measuring pumps 13 and 14 so that the equivalent ratios became as shown in Table-1 and discharged into the molding groove 21 of the molding drum 20 controlled to a temperature of 145 °C from the discharge port 17a while evenly stirring and mixing. Production processes following this are the same as those explained in the production process using the production apparatus 10.

Preferred Embodiment 2

A cleaning blade was produced by the same method as that in Preferred Embodiment 1 described above, except that the high molecular weight polyol contained in the prepolymer component was changed from polycaprolactone ester diol (average molecular weight: 2,000) to polyethylene adipate diol (average molecular weight: 2,000)

Preferred Embodiment 3

A cleaning blade was produced by the same method as that in Preferred Embodiment 1 described above, except that a pseudoprepolymer method was employed in which a viscosity difference between the prepolymer and the crosslinking agent was decreased and the mixing ratio was set to 1:1.

Preferred Embodiment 4

A cleaning blade was produced by the same method as that in Preferred Embodiment 1 described above, except that the high molecular weight polyol contained in the pseudoprepolymer component and the crosslinking agent component was changed from polycaprolactone ester diol (average molecular weight: 2,000) to polyethylene adipate diol (average molecular weight: 2,000).

In every preferred embodiment, physical properties and dimensional accuracy which are by no means inferior compared to a centrifugal molding method and a die molding method which are conventional methods were shown, and the cleaning blades thus produced could sufficiently stand practical use.

Table 1

| Blend compositions and molding conditions | | | | | |
|---|---|---|---|---|---|
| | | Preferred Embodiment | | | |
| | | 3 | 4 | 1 | 2 |
| Preparation of prepolymer | | 1) | 2) | 1) | 1) |
| High molecular weight polyol (weight parts) | | 22.2 | 22.2 | 66.1 | 66.1 |
| Polyisocyanate 3) (weight parts) | | 27.8 | 27.8 | 27.8 | 27.8 |
| Isocyanate group content (weight parts) | | 16.7 | 16.7 | 7.0 | 7.0 |
| Isocyanate group/hydroxyl group equivalent ratio | | 9.9 | 9.9 | 3.4 | 3.4 |
| Preparation of crosslinking agent | | | | | |
| 1,4-Butanediol (weight parts) | | 4.3 | 4.3 | 4.3 | 4.3 |
| Trimethylolpropane (weight parts) | | 1.8 | 1.8 | 1.8 | 1.8 |
| High molecular weight polyol 4) (weight parts) | | 43.9 | 43.9 | | |
| Reaction accelerator5) (weight parts) | | 0.07 | 0.07 | 0.07 | 0.07 |
| Molding conditions | | | | | |
| OH group/NCO group equivalent ratio | | 0.86 | 0.86 | 0.95 | 0.95 |
| Liquid temperature | prepolymer (°C) | 60 | 60 | 70 | 70 |
| | crosslinking agent (°C) | 60 | 60 | 45 | 45 |
| Die temperature | molding roll (°C) | 145 | 145 | 145 | 145 |
| | molding belt (°C) | 145 | 145 | 145 | 145 |
| | cooling belt (°C) | 20 | 20 | 20 | 20 |
| Molding pressure (KPa) | | 1960 | 1960 | 1960 | 1960 |
| Time until start of pressuration (seconds) | | 20 | 20 | 20 | 20 |
| Pressure holding time (seconds) | | 40 | 40 | 40 | 40 |
| Peripheral speed of molding roll (m/minute) | | 2 | 2 | 2 | 2 |

Note:
1) Polycaprolactone ester diol (molecular weight: 2,000)
2) Polyethylene adipate diol (molecular weight: 2,000)
3) 4,4-diphenylmethanediisocyanate
4) Same as that used for preparetion of prepolymer
5) 1,2-dimethylimidazole

Table 2

| Physical properties and dimensional accuracy of molds | | | | | |
|---|---|---|---|---|---|
| | Preferred Embodiment | | | | |
| | 3 | 4 | 1 | 2 | |
| Physical properties of molds 1) | | | | | |
| Hardness (JIS-A) | 65 | 65 | 66 | 65 | |
| Tensile strength (MPa) | 25 | 22 | 26 | 24 | |
| Elongation (%) | 330 | 330 | 340 | 330 | |
| Tearing strength (KN/m) | 25 | 30 | 26 | 32 | |
| Permanent set (%) | 1 | 1 | 1 | 1 | |
| Impact resilience (%) | 27 | 19 | 28 | 20 | |
| Tensile elastic modulus (MPa) | 4.7 | 4.6 | 4.4 | 4.4 | |
| Dimensions of molds | | | | | |
| Thickness (mm) | 2.0 | 2.0 | 2.0 | 2.0 | |
| Width (mm) | 15.0 | 15.0 | 15.0 | 15.0 | |
| Length (mm) | 320 | 320 | 320 | 320 | |
| Roughness of ridgeline (mm) | 3≦ | 3≦ | 3≦ | 3≦ | |
| Linearity (mm) | ≦0.1 | ≦0.1 | ≦0.1 | ≦0.1 | |
| Flatness (mm) | ≦0.1 | ≦0.1 | ≦0.1 | ≦0.1 | |
| Performance of cleaning blades | | | | | |
| Cleanability 2) | | ○ | ○ | ○ | ○ |
| Abrasion and damage of ridgeline 3) | | ○ | ○ | ○ | ○ |
| Scratch and deterioration of sensitizer 4) | | ○ | ○ | ○ | ○ |

Note:
1) Vulcanized rubber physical test method according to JIS K-6301.
2) Installed in a commercially available copier, and after copying 10,000 sheets, an obtained image was visually observed. Every one was good.
3) Blades after testing were taken away to investigate the abrasion state thereof with a microscope. Every one showed very little abrasion and was equivalent to those obtained by conventional methods.
4) The surfaces of sensitizers after testing were visually observed. Everyone was good.

The present invention is not limited to the production of a cleaning blade and is suitable as well for applications such as, for example, a blade for polyurethane squeezing in screen process printing.

As will be clear from the above explanation, the present invention has the following advantages or effects:

(1) The present invention has made it possible to mold a banded continuous polyurethane elastomer, which is a thermosetting polyurethane, without making a sheet by a melt-extrusion molding method of thermoplastic polyurethane, which in turn has made it possible to automate and simplify the production process while maintaining the excellent characteristics of the thermosetting polyurethane and produce a cleaning blade in a high productivity process. Further, installation cost can be reduced.

(2) According to the production method described above, not only a narrow cutting margin can be cut smoothly but also a sharp ridgeline can be formed and a cleaning blade having high quality can be obtained.

(3) Further, according to the production method, the reaction proceeds smoothly.

(4) Because the cleaning blade described above has one face of the blade finished to a mirror face and a sweeping ridgeline is sharply formed, the quality is high and the cost is inexpensive.

(5) With the production apparatus described above, the production method of the present invention can surely be enforced, and installation cost can be reduced.

(6) A ceramic-edged tool having low frictional resistance and high durability can be used over a long period of time. Also, a sharp ridgeline required for the cleaning blade can be formed therewith.

(7) In the production apparatus described above, when pressure exerted to the outer peripheral face of the molding drum described above is insufficient using only the pressure of the endless belt described above, pressure can be added with a pressure device.

## Claims

**1.** A production method for a cleaning blade comprises the steps of:

mixing and stirring a liquid polyurethane prepolymer, which is a raw material component for a thermosetting type polyurethane polymer, and a liquid crosslinking agent,

injecting the mixture thereof into a continuous die having a concave cross section, which is heated at a prescribed temperature,

heating and pressurizing the mixture in the die to continuously mold a banded blade molding having a fixed width, and

cutting the banded blade molding by a fixed length after removing it from the die and cooling it down.

**2.** The production method for the cleaning blade described in claim 1, wherein a cutting margin provided at one side edge of the banded blade molding is cut continuously with a fixed edged tool disposed perpendicularly to one face thereof at an initial stage in said cooling while transporting the banded blade molding from the die.

**3.** The production method for the cleaning blade described in claims 1 or 2, wherein a high molecular weight polyol component mixed into at least one of the liquid of the polyurethane prepolymer and the liquid of the crosslinking agent has a number average molecular weight of about 500 to about 5,000 and an average functional group number (f) of $2 \leqq f \leqq 4$.

**4.** A cleaning blade produced by the production method described in any of claims 1 or 2.

**5.** A cleaning blade produced by the production method described in claim 3.

**6.** A production apparatus for a cleaning blade, comprising:

a molding drum which has molding grooves having concave cross sections formed over an entire periphery of an outer peripheral face thereof and which is supported horizontally and rotated around a horizontal center axis,

a measuring mix-casting machine disposed over said molding drum with a lower discharge port for a mixed solution turned toward the molding grooves and serving for mixing and stirring a liquid of a polyurethane prepolymer, which is a raw material component for a thermosetting type polyurethane polymer, and a liquid of a crosslinking agent,

a metallic endless belt which is pressed to a part of an outer peripheral face of the molding drum and which runs in synchronization with a peripheral speed of the molding drum,

a cooling belt conveyor on which a transporting part for said blade molding is horizontally disposed with one end thereof close to an output portion for the banded blade molding in the molding grooves of the molding drum, a cooling device for cooling a non-transporting portion of the endless belt in the belt conveyor, and a cutter for cutting said blade molding to a fixed length.

**7.** The production apparatus of the cleaning blade described in claim 6, wherein a conveyor belt in said belt conveyor is composed of a metallic endless conveyer belt, and a ceramic edged tool is disposed over a horizontally running part of the endless conveyor belt so that one side edge of said banded blade molding can be cut in a longitudinal direction.

**8.** The production apparatus of the cleaning blade described in claim 7, wherein a pressure device for supplementing the pressure of said endless belt can be provided at a rear face of the endless belt pressed to an outer peripheral face of the molding drum.

FIG. 1

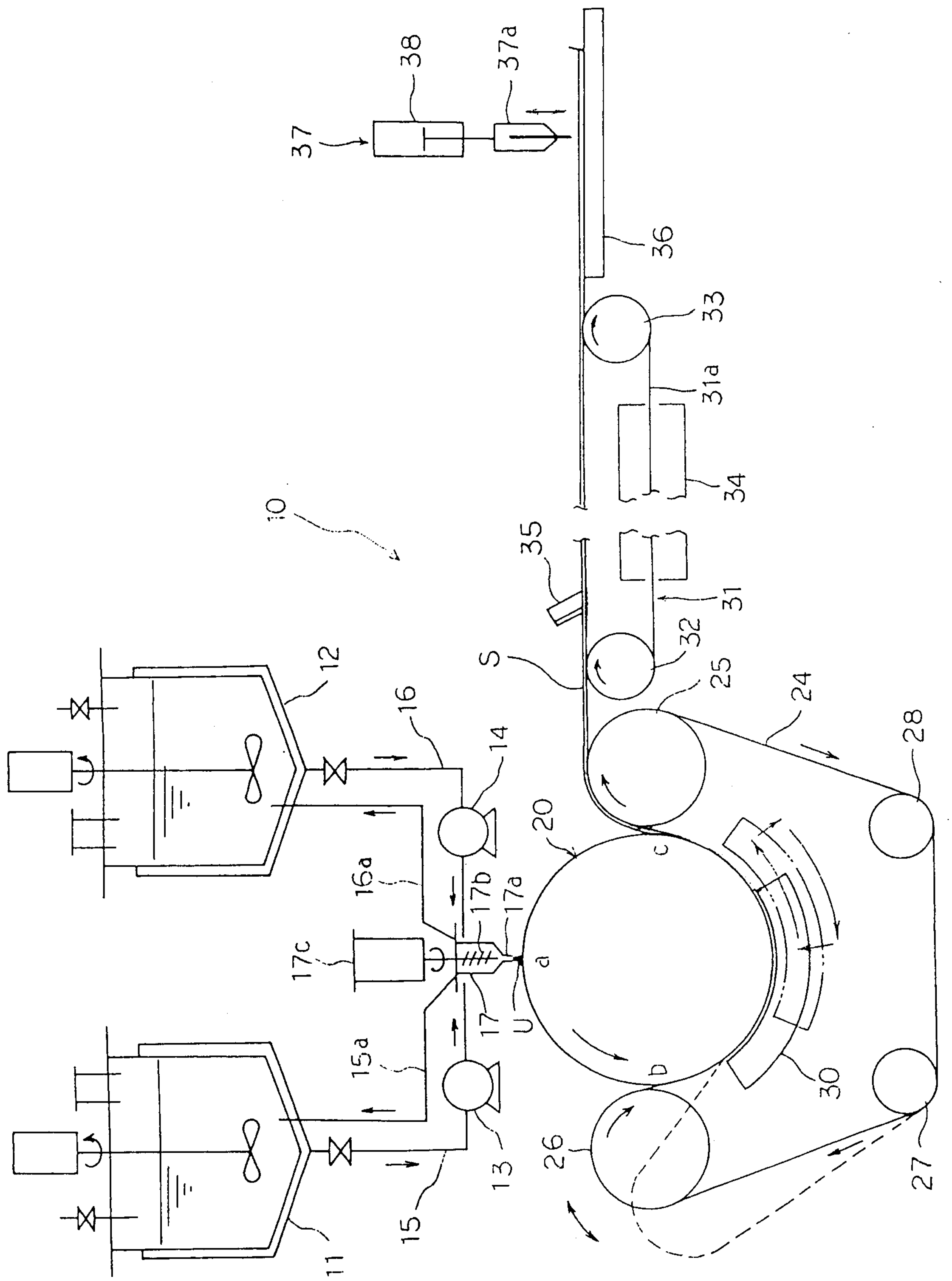
10
11
12
13
14
15
15a
16
16a
17
17a
17b
17c
20
24
25
26
27
28
30
31
31a
32
33
34
35
36
37
37a
38
S
U
a
b
c

FIG. 2

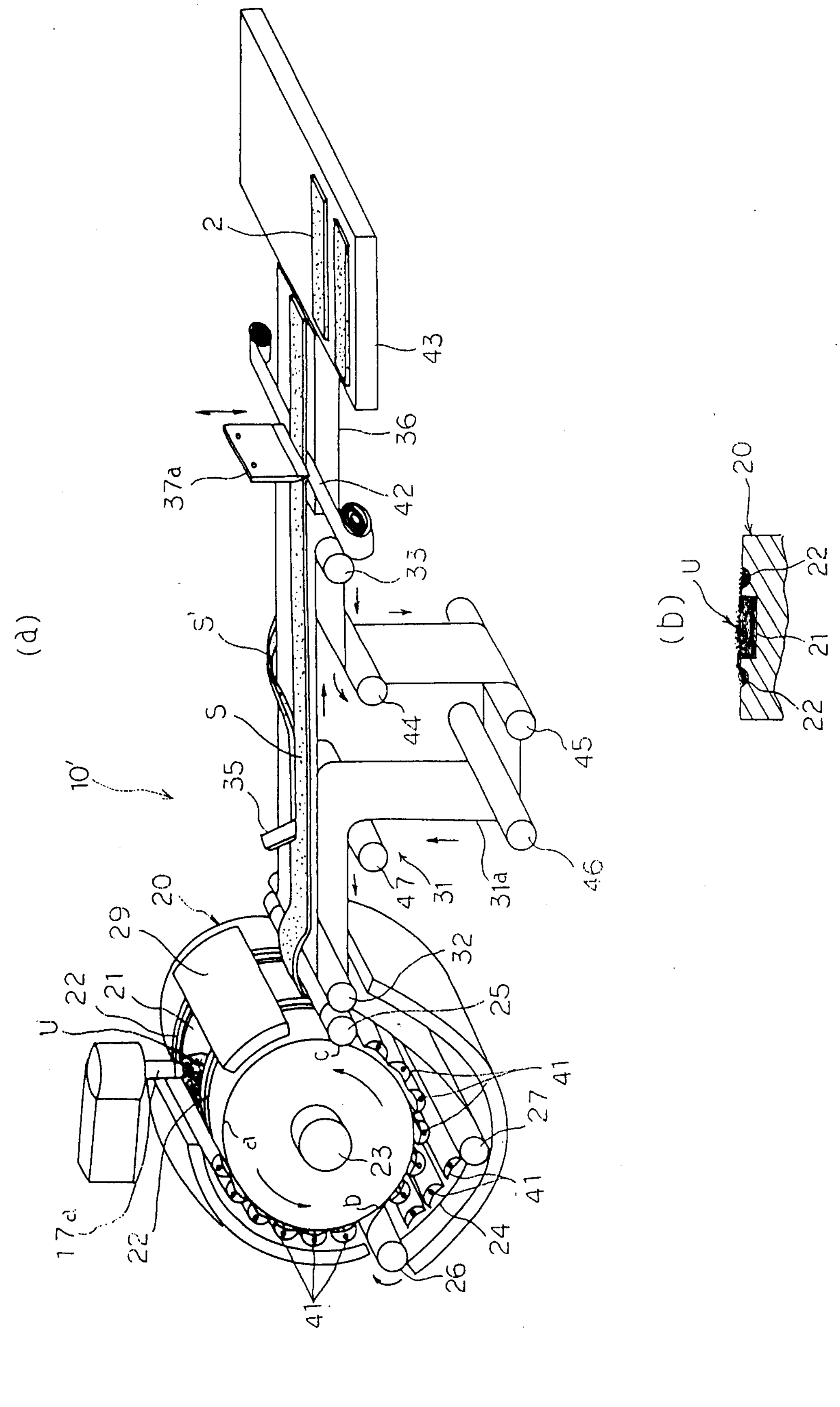
(a)
(b)
2
43
36
37a
42
33
S'
S
44
45
46
47
31
31a
35
10'
20
29
22
21
U
17a
22
23
a
b
c
25
32
41
27
41
24
26
41
20
22
U
21
22

FIG. 3

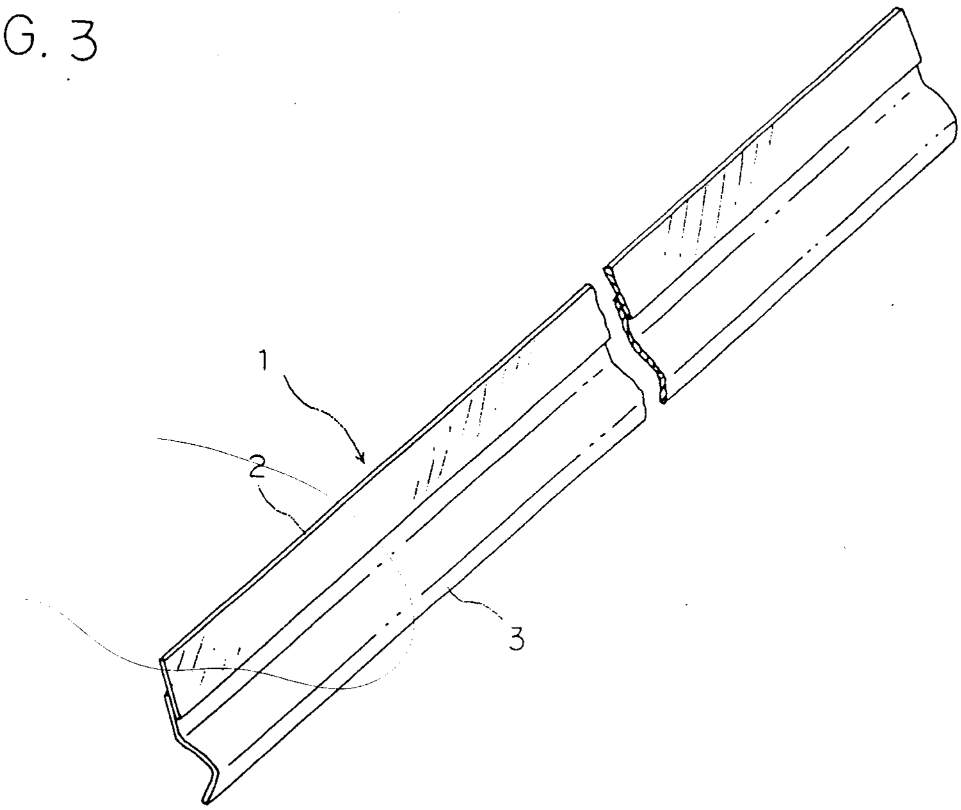


FIG. 4